# FASCICULE DE BREVET EUROPEEN

(11) **EP 3 293 044 B1**
(45) Date de publication et mention de la délivrance du brevet: **08.01.2020**
(21) Numéro de dépôt: 17189971.9
(22) Date de dépôt: 07.09.2017
(51) Int. Cl.: B60N 2/818, B60N 2/897, B60N 2/60

(54) **ENSEMBLE D'APPUI-TÊTE DE SIÈGE DE VÉHICULE ET SIÈGE DE VÉHICULE COMPRENANT UN TEL ENSEMBLE**
KOPFSTÜTZENEINHEIT EINES FAHRZEUGS, UND FAHRZEUGSITZ, DER EINE SOLCHE EINHEIT UMFASST
HEADREST ASSEMBLY FOR VEHICLE SEAT AND VEHICLE SEAT COMPRISING SUCH AN ASSEMBLY

(30) Priorité: 08.09.2016 FR 1658375
(43) Date de publication de la demande: 14.03.2018
(73) Titulaire: FAURECIA Sièges d'Automobile, 92000 Nanterre (FR)
(72) Inventeur: SOLTNER, Stéphane, 70240 Mailleroncourt Charette (FR); LELIEVRE, François, 92160 ANTONY (FR); GAYON, David, 91580 ETRECHY (FR)
(74) Mandataire: Plasseraud IP

(56) Documents cités:
- EP-A1- 1 712 407
- WO-A1-2013/188371
- DE-A1- 3 200 321
- FR-A1- 2 987 792
- FR-A1- 3 010 951

## Description

La présente invention est relative aux ensembles d'appui-têtes de siège pour véhicule, aux sièges de véhicule comportant de tels ensembles et au procédé de fabrication d'un ensemble d'appui-tête.

On connait un ensemble d'appui-tête comprenant une broche unique sur laquelle est monté une structure de soutien permettant de soutenir la tête d'un occupant de siège, la structure de soutien étant par exemple réglable en hauteur par rapport au dossier du siège par coulissement des broches de l'appui-tête dans la structure du dossier. Avec de tels ensembles, il est nécessaire d'adapter les structure des dossiers afin qu'ils puissent coopérer avec la broche unique des appui-têtes. En effet, les structures de dossiers standards sont adaptées pour des appui-têtes comprenant deux broches. Une telle modification entraine une augmentation importante des coûts de fabrication.

On connait également un ensemble d'appui-tête comprenant deux broches sur lesquelles est monté la structure de soutien, la structure de soutien étant par exemple réglable en hauteur. Les broches de l'ensemble d'appui-tête sont adaptées pour être disposées dans des logements prévues dans la structure de dossier et pour passer au travers d'une plaque plastique solidaire du dossier afin d'améliorer le rendu final du dossier. le document FR3010951A1 montre un ensemble d'appui-tête pour siège de véhicule comprenant deux broches s'étendant chacune sensiblement selon une direction de réglage entre une extrémité inférieure et une extrémité supérieure, chacune des deux broches ayant une partie de montage comprenant l'extrémité inférieure et destinée à être fixée à un dossier de siège, une partie de réglage comprenant l'extrémité supérieure, et une partie intermédiaire comprise entre la partie de montage et la partie de réglage, et une structure de soutien adaptée pour soutenir la tête d'un utilisateur.

Ainsi, un tel ensemble dossier-appui-tête comprend un grand nombre de pièces, et est donc long et coûteux à fabriquer et à assembler. Il est en particulier nécessaire d'assembler au préalable la plaque plastique sur le dossier et de s'assurer de son bon alignement avec les logements du dossier afin de permettre l'assemblage de l'appui-tête sur le dossier.

La présente invention vise à résoudre ces inconvénients. La présente invention vise en particulier un ensemble d'appui-tête plus agréable esthétiquement, plus facile et moins coûteux à fabriquer et simple d'utilisation.

Ainsi, l'invention concerne un ensemble d'appui-tête pour siège de véhicule comprenant :
- deux broches s'étendant chacune sensiblement selon une direction de réglage entre une extrémité inférieure et une extrémité supérieure, chacune des deux broches ayant une partie de montage comprenant l'extrémité inférieure et destinée à être fixée à un dossier de siège, une partie de réglage comprenant l'extrémité supérieure, et une partie intermédiaire comprise entre la partie de montage et la partie de réglage,
- et une structure de soutien adaptée pour soutenir la tête d'un utilisateur.
l'ensemble d'appui-tête comprend en outre une interface réalisée en matière plastique surmoulée et reliant entre elles les parties intermédiaires des deux broches.

Grâce à ces dispositions, l'ensemble d'appui-tête est plus simple et moins coûteux à fabriquer et est adapté à tous les dossiers standards. Il est ainsi possible d'améliorer la forme et l'aspect de la partie intermédiaire des broches, notamment par surmoulage, sans limiter les fonctions de l'appui-tête.

Dans divers modes de réalisation de l'invention, on peut éventuellement avoir recours en outre à l'une et/ou à l'autre des dispositions suivantes :
- l'ensemble d'appui-tête comprend en outre une platine de réglage solidaire de la partie de réglage de chacune des deux broches, la structure de soutien étant montée réglable en translation sur la platine de réglage selon la direction de réglage ; ainsi, l'occupant du siège peut régler la hauteur de l'appui-tête, améliorant ainsi le confort général du siège ;
- la platine de réglage est réalisée en matière plastique surmoulée sur la partie de réglage de chacune des deux broches ; ainsi la platine de réglage est simple et économique de réalisation ;
- l'interface est surmoulée d'un seul tenant sur les broches avec la platine de réglage de sorte à former une structure de support, la structure de support étant constituée en une seule pièce ; ainsi une seule étape est nécessaire à la fabrication de la structure de support, réduisant le coût général de l'appui-tête ;
- la platine de réglage est au moins partiellement surmoulée par l'interface ;
- les deux broches sont métalliques, et dans lequel les parties intermédiaires des broches sont recouvertes au moins partiellement par l'interface surmoulée ; ainsi, l'appui-tête présente un aspect général extérieur d'appui-tête mono-broche tout en étant adapté aux traverses supérieures d'armatures de dossiers standards présentant deux trous d'insertions pour les broches d'appui-têtes, il n'est donc pas nécessaire de modifier les traverses supérieures d'armatures de dossiers et il n'y a pas d'augmentation des coûts de fabrication des appui-têtes ; en outre, les broches métalliques permettent de répondre aux contraintes de sécurité de tenu des appui-têtes ;
- les parties intermédiaires des broches sont recouvertes intégralement par l'interface surmoulée ;
- l'interface est massive ; améliorant la solidité générale de l'appui-tête ;
- l'interface est surmoulée d'un seul tenant sur les parties intermédiaires des broches ;
- la partie intermédiaire de chacune des broches présente un décrochement ayant une base s'étendant selon une direction transversale perpendiculaire à la direction de réglage et deux coudes reliant ladite base aux autres portions de broches s'étendant selon la direction de réglage; ainsi l'aspect générale de l'appui-tête est amélioré, la visibilité des autres passagers du véhicule est améliorée, et ce en respectant les contraintes de sécurité.

L'invention concerne également un procédé de fabrication d'un ensemble d'appui-tête selon l'invention, comprenant au moins une étape consistant à :
- mouler par injection de matière plastique une interface de sorte à relier entre elles deux broches. Ainsi, le procédé de fabrication de l'appui-tête comprend peu d'étapes et permet ensuite un assemblage rapide de l'appui-tête sur le dossier d'un siège, réduisant les coûts généraux dudit appui-tête.

Dans divers modes de réalisation du procédé selon l'invention, on peut éventuellement avoir recours en outre à l'une et/ou à l'autre des réalisations suivantes :
- on dispose deux broches métalliques dans un moule, et dans lequel on effectue le moulage par injection de matière plastique pour surmouler l'interface au moins partiellement sur une partie intermédiaire de chacune des broches ; les opérations de surmoulage sont économiques et permettent de réduire le coût général de fabrication de l'appui-tête,
- le procédé comprenant au moins une étape consistant à mouler par injection de matière plastique, une platine de réglage en surmoulant une partie de réglage de chacune des broches ;

- on dispose une platine de réglage dans un moule, et dans lequel on effectue le moulage par injection de matière plastique pour surmouler l'interface au moins partiellement sur la platine de réglage ;
- comprenant au moins les étapes consistant à solidariser la platine de réglage sur une partie de réglage des deux broches métalliques, placer l'ensemble formé par la platine de réglage et les deux broches dans le moule, mouler par injection de matière plastique l'interface en surmoulant la partie intermédiaire des deux broches et la platine de réglage.

L'invention concerne également un siège comprenant un dossier et un ensemble d'appui-tête selon l'invention, dans lequel les deux broches sont solidaires du dossier.

Avantageusement, le dossier comporte une partie supérieure à partir de laquelle s'étendent les broches et ladite partie supérieure est recouverte (au moins au voisinage des broches) par l'interface, de sorte que l'interface permet de masquer :
- des coutures ou autres éléments permettant le raccord de la coiffe du dossier au niveau du passage des broches de l'ensemble d'appui-tête,
- les trous permettant le passage des broches et
- la matelassure présente sous la coiffe.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant un mode de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue schématique de côté d'un siège de véhicule selon une forme de réalisation de la présente invention ;
- la figure 2 est une vue en perspective d'un ensemble d'appui tête selon une réalisation de l'invention comprenant une interface recouvrant partiellement des portions intermédiaires des broches de l'ensemble d'appui-tête ;

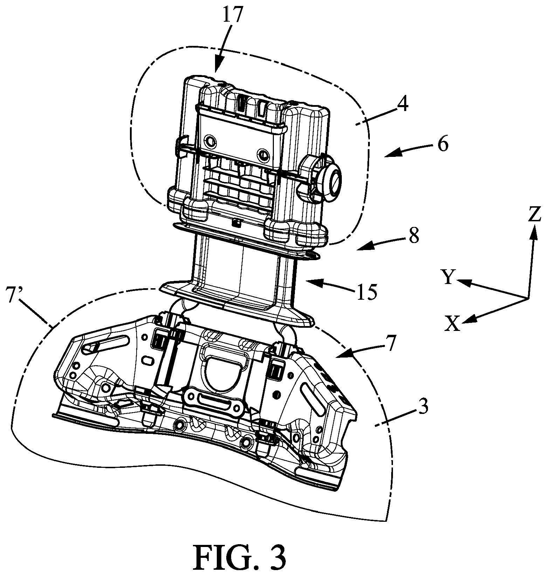

- la figure 3 est une vue en perspective d'un ensemble d'appui tête selon une réalisation de l'invention comprenant une interface recouvrant totalement les portions intermédiaires des broches de l'ensemble d'appui-tête ;
- la figure 4 est une vue éclatée de l'ensemble d'appui-tête de la figure 3 ; et

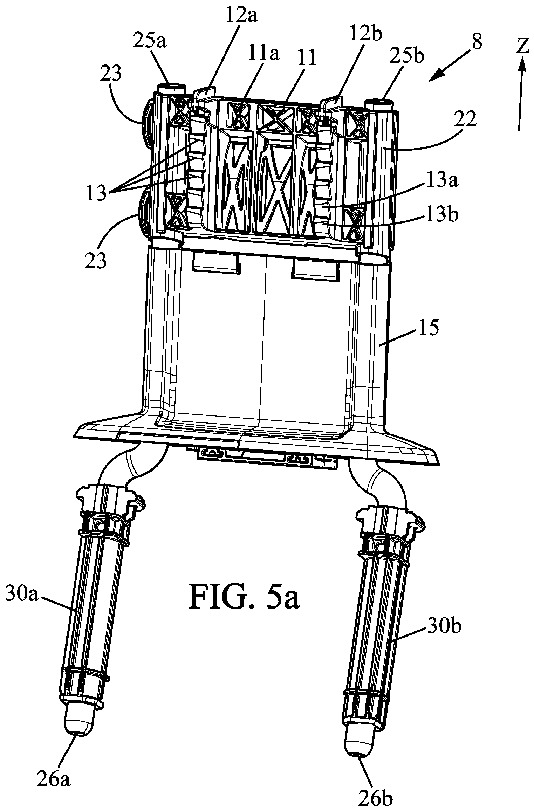

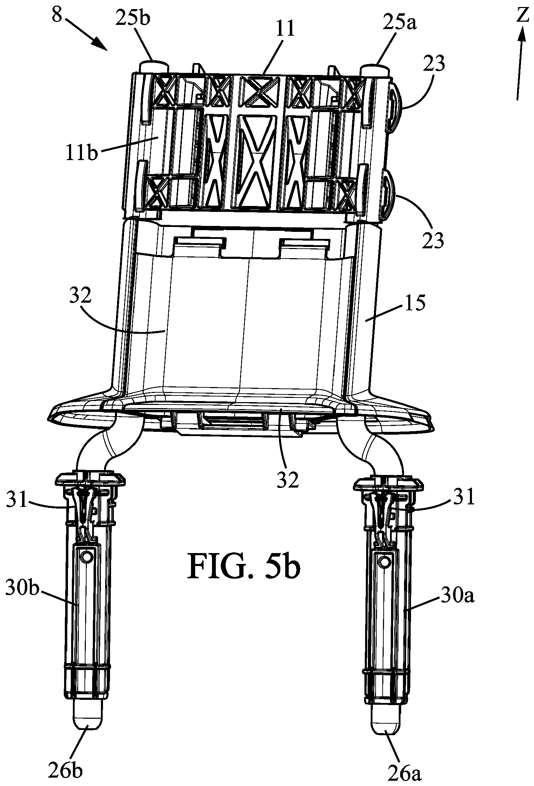

- les figures 5a et 5b sont des vues avant et arrière, en perspective, d'une structure de support de l'ensemble d'appui-tête de la figure 3.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

Dans la description qui suit, lorsque l'on fait référence à des qualificatifs de position absolue, tels que les termes 'avant', 'arrière', 'haut', 'bas', 'gauche', 'droite', etc., ou relative, tels que les termes 'dessus', 'dessous', 'supérieur', 'inférieur', etc., ou à des qualificatifs d'orientation, il est fait référence à un siège, et notamment à un appui-tête, dans une position normale d'utilisation de celui-ci dans le sens de progression ordinaire du véhicule.

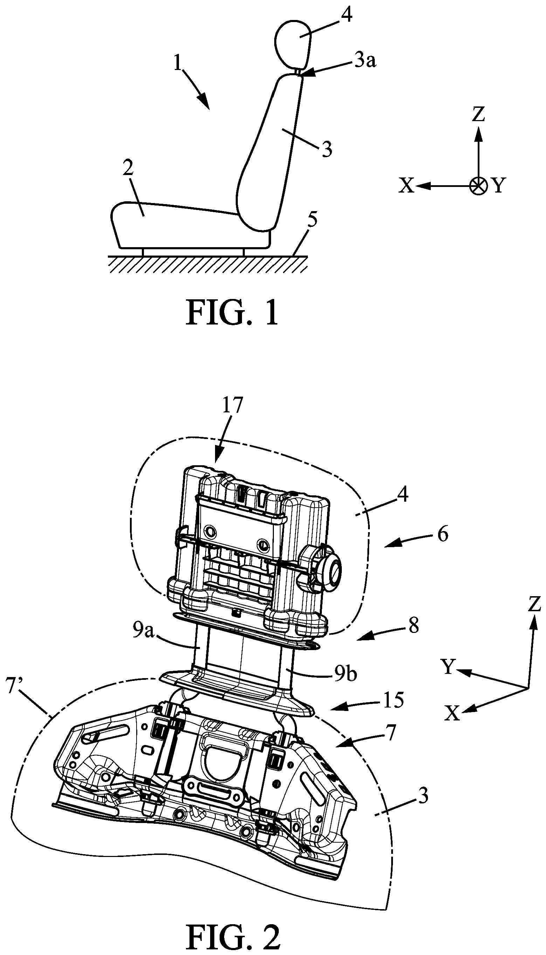

La figure 1 représente un siège 1 de véhicule automobile présentant une assise 2 destinée à recevoir un occupant du siège 1 et un dossier 3 portant un appui-tête 4. L'assise 3 est fixée à une structure fixe 5, notamment au plancher du véhicule.

L'appui-tête 4 comprend plus précisément un ensemble d'appui-tête 6. Comme illustré sur la figure 2, l'ensemble d'appui-tête 6 peut être relié à une armature 7 du dossier 3.

L'armature 7 supporte une matelassure par exemple recouvert par une coiffe 7' qui constitue la partie visible du dossier 3 en utilisation nominale du siège 1. La coiffe 7' masque donc à la vue l'armature 7 et la matelassure. L'ensemble de la matelassure et de la coiffe 7' peut généralement être désigné par le terme de garniture.

L'ensemble d'appui-tête 6 est relié au dossier 2 par l'intermédiaire d'une structure de support 8. La structure de support 8 comprend deux broches 9a, 9b. Les deux broches 9a, 9b de la structure de support 8 sont parallèles l'une et l'autre, s'étendant sensiblement selon une direction de réglage Z. Les deux broches 9a, 9b sont de section externe généralement cylindrique. Les deux broches 9a, 9b sont de préférence métalliques, mais peuvent être en un autre matériau, tel que du plastique par exemple, ou autre. Les deux broches 9a, 9b s'étendent respectivement entre une extrémité supérieure 25a, 25b et une extrémité inférieure 26a, 26b. Les deux broches 9a, 9b comprennent respectivement une partie de montage 14a, 14b comprenant l'extrémité inférieure 26a, 26b. La partie de montage 14a, 14b est adaptée pour être fixée à l'armature 7 du dossier 3. Les deux broches 9a, 9b comprennent en outre respectivement une partie de réglage 16a, 16b comprenant l'extrémité supérieure 25a, 25b. Les deux broches 9a, 9b comprennent en outre respectivement une partie intermédiaire 20a, 20b comprise entre la partie de montage 14a, 14b et la partie de réglage 16a, 16b.

En position relevée du dossier, les deux broches 9a, 9b s'étendent vers le haut à partir d'une partie supérieure 3a du dossier (figure 1).

En variante, la structure de support 8 peut comprendre un unique tube métallique de section externe généralement cylindrique et ayant une forme de U inversé. Chacune des parois latérales du U formant l'une des branches 9a, 9b et peut être divisée en une partie de montage, une partie intermédiaire et une partie de réglage. La base du U forme une traverse reliant entre elles les deux parois latérales formant les broches 9a, 9b.

Chacune des deux broches 9a, 9b peut être droite. Plus particulièrement, l'extrémité supérieure 25a, 25b et l'extrémité inférieure 26a, 26b de chacune des deux broches 9a, 9b sont alignées sur une même droite.

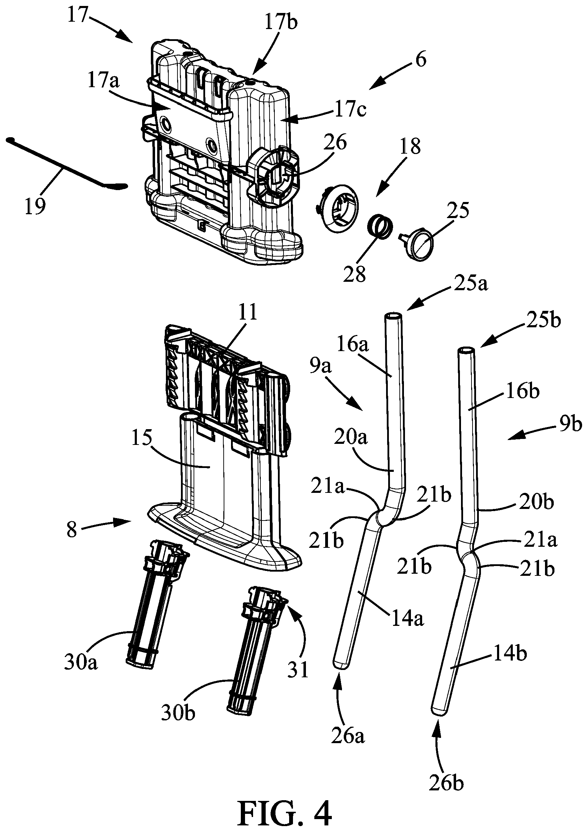

En variante, et comme représenté sur la figure 4, la structure de support 8 peut comprendre deux broches 9a, 9b de section externe généralement cylindrique et dont les parties intermédiaires 20a, 20b comprennent respectivement un décrochement 21.

Le décrochement 21 comprend une base 21a s'étendant selon une direction transversale Y, perpendiculaire à la direction de réglage Z, et deux coudes 21b reliant ladite base 21 aux autres portions de broches 9a, 9b s'étendant selon la direction de réglage Z.

En variante, le décrochement 21 peut présenter une forme de U incliné. Le décrochement 21 comprend deux branches latérales sensiblement parallèles à la direction transversale et une base sensiblement parallèle à la direction de réglage Z reliant les deux branches latérales.

La structure de support 8 peut en outre comprendre une platine de réglage 11. La platine de réglage 11 est, par exemple, une plaque de forme sensiblement rectangulaire présentant une face avant 11a et une face arrière 11b. La platine de réglage 11 s'étend selon la direction transversale Y entre les deux broches 9a, 9b. La platine de réglage 11 est notamment fixée au niveau des parties de montages 14a, 14b des broches 9a, 9b. La platine de réglage 11 est ainsi solidaire aux broches 9a, 9b.

La face avant 11a de la platine de réglage 11 peut comprendre au moins un élément indenté, et dans le mode de réalisation représenté, deux éléments indentés 12a, 12b, aussi appelés crémaillères, comprenant des encoches 13.

Chacune des encoches 13 peut comprendre, par exemple, une portion de butée 13a ayant une surface perpendiculaire à la direction de réglage Z, notamment orientée vers le haut, et une rampe 13b sur le côté opposé de l'encoche 13. Ainsi, les encoches 13 ont un profil avantageusement dissymétrique. L'aménagement des encoches 13 sur la platine de réglage 11 permet de créer une distance, appelée pas, entre deux encoches 13, par exemple, de réaliser un pas inférieur ou égale à 5 mm.

L'ensemble d'appui-tête 6 peut en outre comprendre une structure de soutien 17. La structure de soutien 17 comprend une face avant 17a, notamment apte à supporter une tête d'un occupant du siège 1, et une face arrière 17b. La structure de soutien 17 comprend également deux faces latérales 17c comprises respectivement entre la face avant 17a et la face arrière 17b. La structure de soutien 17, en particulier les faces avant et arrière 17a, 17b, peuvent être recouvertes d'une matelassure et/ou d'une coiffe d'habillage représentés schématiquement en traits mixte sur la figure 2. Ainsi, un occupant du siège peut reposer sa tête sur la face avant 17a de la structure de soutien 17 lorsqu'il se trouve en position assise sur le siège 1.

L'appui-tête 4 peut être ajustable selon la direction de réglage Z. La structure de soutien 17 peut être montée mobile sur la structure de support 8 en translation suivant la direction de réglage Z. La structure de soutien 17 est plus particulièrement montée mobile sur la platine de réglage 11 en translation suivant la direction de réglage Z. La structure de soutien 17 permet ainsi d'ajuster la position de l'appui-tête 4 par rapport au dossier 2. En particulier, l'appui-tête 4, notamment la structure de soutien 17, peut être ajustée entre une position basse et une position haute.

En outre, la platine de réglage 11 comprend des nervures 22 ou éléments de guidage avantageusement déformables 23 qui font saillie et s'étendent le long de la direction de réglage Z. Ces nervures 22 ou éléments de guidage 23 sont plus particulièrement situées au niveau des extrémités supérieures 25a, 25b des broches 9a, 9b. Ces nervures 22 ou éléments de guidage 23 servent à guider en coulissement la structure de soutien 17 sur la platine de réglage 11 selon la direction de réglage Z.

Afin de verrouiller la position de la structure de soutien 17 par rapport à la platine de réglage 11, l'ensemble d'appui-tête 6, notamment la structure de soutien 17 peut également comprendre un système de verrouillage 18.

Le système de verrouillage 18 comprend au moins un fil de verrouillage 19. Le fil de verrouillage 19 est notamment supporté et guidé par la structure de soutien 17.

En particulier, la structure de soutien 17, et notamment la face latérale 17a, comporte un bouton de manœuvre 25. Le bouton de manœuvre 25 est relié au fil de verrouillage 19 au moyen d'une ouverture cylindrique 26 agencée sur une face latérale 17c de la structure de soutien 17. Le bouton de manœuvre 25 est actionnable par un utilisateur du siège 1 par enfoncement, entre une position verrouillé et une position déverrouillée. Dans la position verrouillée, le fil de verrouillage 19 coopère avec au moins une des encoches 13 de la platine de réglage 11 pour interdire le mouvement de translation suivant la direction de réglage Z de la structure de soutien 17, au moins dans un sens de déplacement. Dans la position déverrouillée, le fil de verrouillage 19 autorise le mouvement de translation suivant la direction de réglage Z de la structure de soutien 17. Il est alors possible de d'ajuster la position de l'appui-tête 4, et notamment de la structure de soutien 17, par rapport au dossier 2. Un organe de rappel 28, par exemple un ressort, permet de solliciter élastiquement le bouton de manœuvre 25 vers la position verrouillée.

Un tel système de verrouillage 18 est connu en soi et ne sera pas décrit plus en détail. A titre d'exemple, le document FR 13 59125 décrit par exemple un appui-tête réglable en hauteur comprenant un système de verrouillage pour sélectivement verrouiller et déverrouiller la structure de soutien 17 de l'appui-tête 4.

La structure de support 8 peut en outre comprendre deux gaines 30a, 30b. Les gaines 30a, 30b sont plus particulièrement fixées aux partie de montages 14a, 14b des broches 9a, 9b. Les gaines 30a, 30b entourent respectivement les parties de montages 14a, 14b des broches 9a, 9b. Chacune des gaines 30a, 30b peut être formée par un corps tubulaire présentant un axe suivant la direction de réglage Z. Chacune des gaines 30a, 30b comprend également une section circulaire ou carrée. Les gaines 30a, 30b sont de préférence identiques l'une l'autre.

Les parties de montages 14a, 14b, notamment chacune des gaines 30a, 30b, sont adaptées pour être disposées dans des logements, tels que des douilles prévues dans l'armature 7 de dossier 3, ou sont adaptées pour être fixées directement au dossier 3. Il est ainsi possible de fixer la structure de support 8 de façon fixe au dossier 2 comme cela est représenté sur la figure 2.

Afin de bloquer l'appui tête 4 sur le dossier 3, chacune des gaines 30a, 30b peut en outre comprendre un système de blocage 31. Dans le mode de réalisation représenté sur la figure 4, le système de blocage 31 comprend deux éléments de blocage permettant de bloquer les deux gaines 30a, 30b dans l'armature de dossier 7.

De telles gaines 30a, 30b et un tel système de blocage 31 sont connus en soi et ne seront pas décrits plus en détails.

La structure de support 8 peut en outre comprendre une interface 15. L'interface 15 relie les deux broches 9a, 9b entre elles. Plus particulièrement, l'interface 15 relie les parties intermédiaires 20a, 20b des broches 9a, 9b entre elles. Plus particulièrement, l'interface 15 relie les parties intermédiaires 20a, 20b des broches 9a, 9b au niveau de la jonction entre partie de montage 14a, 14b et partie intermédiaire 20a, 20b afin d'améliorer l'aspect du siège 1 et plus particulièrement l'aspect de la liaison entre le dossier 3 et l'appui-tête 4.

L'interface 15 est massive. Par massive, on comprend notamment que l'interface 15 ne comprend pas de discontinuité. L'interface 15 relie les deux broches 9a, 9b entre elles d'un seul tenant.

L'interface 15 recouvre chacune des parties intermédiaires 20a, 20b des deux broches 9a, 9b. L'interface 15 recouvre ainsi au moins partiellement les parties intermédiaires 20a, 20b des broches 9a, 9b.

En particulier, l'interface 15 peut recouvrir une partie haute, externe, du dossier 3. Plus particulièrement, l'interface 15 peut recouvrir les parties intermédiaires 20a, 20b des broches 9a, 9b en regard du système coiffant 7' de la garniture. L'interface 15 permet de masquer des coutures et/ou découpes réalisées sur le système coiffant pour le clore et/ou pour permettre le passage des broches 9a, 9b. L'interface 15 permet en outre de masquer à la vue de l'utilisateur les trous permettant le passage des broches 9a, 9b et la matelassure présente sous le système coiffant 7'.

En particulier, l'interface 15 peut recouvrir intégralement les parties intermédiaires 20a, 20b des broches 9a, 9b, situées selon la direction de réglage Z entre les gaines 30a, 30b et la platine de réglage 11. Alternativement, l'interface 15 peut recouvrir intégralement les parties intermédiaires 20a, 20b des broches 9a, 9b, situées selon la direction de réglage Z entre le système coiffant 7' de la garniture et la platine de réglage 11. L'ensemble d'appui-tête 6 présente ainsi un aspect d'appui-tête 4 mono-broche tout en étant adapté aux armatures 7 de dossiers 3 standards pour appui-têtes 4 à deux broches.

Du fait que la platine de réglage 11 soit située sur les parties de réglages 16a, 16b des broches 9a, 9b, les parties intermédiaires 20a, 20b des broches 9a, 9b, notamment l'interface 15, ne sont pas utilisées pour permettre le réglage de hauteur de l'appui-tête 4. En particulier, le coulissement de l'appui-tête 4 est réalisé exclusivement par le coulissement de la structure de soutien 17, notamment au niveau des parties de réglage 16a, 16b des broches 9a, 9b. Il n'est pas nécessaire que l'appui-tête 4 coulisse par rapport au dossier 3 au niveau des parties intermédiaires 20a, 20b des broches 9a, 9b, et notamment au niveau de l'interface 15. Notamment, la structure de soutien 17 peut cacher l'interface 15 lorsqu'il coulisse d'une position haute vers une position basse. Ainsi, il est possible de modifier l'aspect de l'interface 15 par un grainage particulier, des motifs en creux et/ou des motifs en saillie, un ajout de de couleur, de forme ou de relief, d'élément de décoration 32 pouvant être en plastique coloré, en bois, en métal ou en carbone. En effet, notamment dans la position haute de l'appui-tête 4, la structure de soutien 17 ne recouvre pas l'interface 15. En outre, dans une position intermédiaire de l'appui-tête 4, la structure de soutien 17 recouvre partiellement l'interface 15. L'interface 15 est généralement ainsi visible pour un occupant.

Selon l'invention, la platine de réglage 11 et l'interface 15 sont formées d'un seul tenant. Par un seul tenant, on comprend notamment que la platine de réglage 11 et l'interface 15 sont formées sans discontinuité de matière. Optionnellement, la platine de réglage 11, l'interface 15 et les gaines 30a, 30b sont formées d'un seul tenant.

Selon l'invention, l'interface 15 est surmoulée sur les broches 9a, 9b. Plus particulièrement, l'interface 15 est surmoulée sur les parties intermédiaires 20a, 20b des broches 9a, 9b. Optionnellement, l'interface 15 est surmoulée sur les parties intermédiaires 20a, 20b des broches 9a, 9b et au moins partiellement sur la platine de réglage 11. Optionnellement, la platine de réglage 11 et l'interface 15 sont surmoulées sur les broches 9a, 9b, la platine de réglage 11 étant surmoulée sur les parties de réglages 16a, 16b et l'interface 15 étant surmoulée sur les parties intermédiaires 20a, 20b. Optionnellement, la platine de réglage 11, l'interface 15 et les gaines 30a, 30b sont surmoulées sur les broches 9a, 9b, la platine de réglage 11 étant surmoulée sur les parties de réglages 16a, 16b, l'interface 15 étant surmoulée sur les parties intermédiaires 20a, 20b et les gaines 30a, 30b étant surmoulées sur les portions de montages 14a, 14b.

L'interface 15 et/ou la platine de réglage 11 et/ou les gaines 30a, 30b sont de préférence surmoulées en une matière plastique sur les broches 9a, 9b.

Du fait que l'interface 15, la platine de réglage 11 et par exemple les gaines 30a, 30b soient surmoulées sur les broches 9a, 9b, la structure de support 8 est avantageusement constitué en une seule pièce. Par une seule pièce, il faut comprendre que les broches 9a, 9b ne peuvent pas être séparées par un utilisateur de l'interface 15 et de la platine de réglage 11, et éventuellement des gaines 30a, 30b.

En particulier, la structure de support 8 comprend, en un seul élément, des éléments usuellement distincts et séparés les uns des autres dans des appui-têtes, tels que l'interface, la platine, les gaines ou les nervures et éléments de guidage. Il en résulte un appui-tête 4 facile et économique à fabriquer. L'appui-tête 4 se révèle en outre plus simple d'utilisation.

L'invention concerne également un procédé de fabrication de l'ensemble d'appui-tête 6, en particulier d'un procédé de surmoulage des deux broches 9a, 9b.

Dans une première étape du procédé de fabrication, on dispose les broches 9a, 9b métalliques dans un moule. Dans une deuxième étape du procédé de fabrication, on ferme le moule et on moule par injection de matière plastique, la platine 11 et l'interface 15, en surmoulant respectivement les parties de réglage 16a, 16b et les partie intermédiaires 20a, 20b des broches 9a, 9b. On forme ainsi une structure de soutien 8 comprenant les broches 9a, 9b et sur lesquelles sont surmoulées la platine de réglage 11 et l'interface 15. Comme discuté ci-avant, des gaines 30a, 30b peuvent également être surmoulées dans cette même étape autour des broches 9a, 9b, notamment au niveau des parties de montage 14a, 14b des broches 9a, 9b.

Selon une variante, on solidarise la platine de réglage 11 sur les parties de réglages 16a, 16b des broches 9a, 9b métalliques et on dispose l'ensemble formé par la platine de réglage 11 et les broches 9a, 9b dans un moule. Dans une deuxième étape du procédé de fabrication, on ferme le moule et on moule par injection de matière plastique l'interface 15, en surmoulant les partie intermédiaires 20a, 20b des broches 9a, 9b et éventuellement au moins partiellement la platine de réglage 11. On forme ainsi une structure de soutien 8 comprenant les broches 9a, 9b et la platine de réglage 11 sur lesquelles sont surmoulées l'interface 15. Comme discuté ci-avant, des gaines 30a, 30b peuvent également être surmoulées dans cette même étape autour des broches 9a, 9b, notamment au niveau des parties de montage 14a, 14b des broches 9a, 9b.

Les broches 9a, 9b, et notamment la partie intermédiaire 20a, 20b des broches 9a, 9b, viennent donc être recouvertes de matière plastique et sont reliées par ladite matière plastique.

La présente invention concerne également un siège 1 comprenant un dossier 3 et un appui-tête 4 tel que décrit précédemment, dans lequel les broches 9a, 9b sont solidaires du dossier 3, notamment de l'armature 7 du dossier 3, de sorte que la structure de soutien 17 est réglable en hauteur par rapport au dossier 3.

## Revendications

1. Ensemble d'appui-tête (6) pour siège (1) de véhicule comprenant :
- deux broches (9a, 9b) s'étendant chacune sensiblement selon une direction de réglage (Z) entre une extrémité inférieure (26a, 26b) et une extrémité supérieure (25a, 25b), chacune des deux broches ayant une partie de montage (14a, 14b) comprenant l'extrémité inférieure et destinée à être fixée à un dossier (3) de siège (1), une partie de réglage (16a, 16b) comprenant l'extrémité supérieure, et une partie intermédiaire (20a, 20b) comprise entre la partie de montage et la partie de réglage,
- et une structure de soutien (17) adaptée pour soutenir la tête d'un utilisateur,
**caractérisé en ce que** l'ensemble d'appui-tête (6) comprend en outre une interface (15) réalisée en matière plastique surmoulée et reliant entre elles les parties intermédiaires (20a, 20b) des deux broches (9a, 9b).

2. Ensemble d'appui-tête (6) selon la revendication 1, comprenant en outre une platine de réglage (11) solidaire de la partie de réglage (16a, 16b) de chacune des deux broches (9a, 9b), la structure de soutien (17) étant montée réglable en translation sur la platine de réglage (11) selon la direction de réglage (Z).

3. Ensemble d'appui-tête (6) selon la revendication 2, dans lequel la platine de réglage (11) est réalisée en matière plastique surmoulée sur la partie de réglage (16a, 16b) de chacune des deux broches (9a, 9b).

4. Ensemble d'appui-tête (6) selon la revendication 3, dans lequel l'interface (15) est surmoulée d'un seul tenant sur les broches (9a, 9b) avec la platine de réglage (11) de sorte à former une structure de support (8), la structure de support (8) étant constituée en une seule pièce.

5. Ensemble d'appui-tête (6) selon la revendication 1 ou la revendication 2, dans lequel la platine de réglage (11) est au moins partiellement surmoulée par l'interface (15) .

6. Ensemble d'appui-tête (6) selon l'une quelconque des revendications précédentes, dans lequel les deux broches (9a, 9b) sont métalliques, et dans lequel les parties intermédiaires (20a, 20b) des broches (9a, 9b) sont recouvertes au moins partiellement par l'interface (15) surmoulée.

7. Ensemble d'appui-tête (6) selon l'une quelconque des revendications précédentes, dans lequel les parties intermédiaires (20a, 20b) des broches (9a, 9b) sont recouvertes intégralement par l'interface (15) surmoulée.

8. Ensemble d'appui-tête (6) selon l'une quelconques des revendications précédentes, dans lequel l'interface (15) est massive.

9. Ensemble d'appui-tête (6) selon l'une quelconque des revendications précédentes, dans lequel l'interface (15) est surmoulée d'un seul tenant sur les parties intermédiaires (20a, 20b) des broches (9a, 9b).

10. Ensemble d'appui-tête (6) selon l'une quelconque des revendications précédentes, dans lequel la partie intermédiaire (20a, 20b) de chacune des broches (9a, 9b) présente un décrochement (21) ayant une base (21a) s'étendant selon une direction transversale (Y) perpendiculaire à la direction de réglage (Z) et deux coudes (21b) reliant ladite base aux autres portions de broches s'étendant selon la direction de réglage (Z).

11. Procédé de fabrication d'un ensemble d'appui-tête (6) selon l'une quelconque des revendications précédentes, comprenant au moins une étape consistant à :
- mouler par injection de matière plastique une interface (15) de sorte à relier entre elles deux broches (9a, 9b).

12. Procédé de fabrication selon la revendication 11, dans lequel on dispose deux broches (9a, 9b) métalliques dans un moule, et dans lequel on effectue le moulage par injection de matière plastique pour surmouler l'interface (15) au moins partiellement sur une partie intermédiaire (20a, 20b) de chacune des broches (9a, 9b) .

13. Procédé de fabrication selon la revendication 11 ou la revendication 12, comprenant au moins une étape consistant à :
- mouler par injection de matière plastique, une platine de réglage (11) en surmoulant une partie de réglage (16a, 16b) de chacune des broches (9a, 9b).

14. Procédé de fabrication selon la revendication 11 ou la revendication 12, dans lequel on dispose une platine de réglage (11) dans un moule, et dans lequel on effectue le moulage par injection de matière plastique pour surmouler l'interface (15) au moins partiellement sur la platine de réglage (11).

15. Procédé de fabrication selon la revendication 14, comprenant au moins les étapes consistant à :
- solidariser la platine de réglage (11) sur une partie de réglage (16a, 16b) des deux broches (9a, 9b) métalliques,
- placer l'ensemble formé par la platine de réglage (11) et les deux broches (9a, 9b) dans le moule,
- mouler par injection de matière plastique l'interface (15) en surmoulant la partie intermédiaire (20a, 20b) des deux broches et la platine de réglage (11).

16. Siège (1) comprenant un dossier (3) et un ensemble d'appui-tête (6) selon l'une quelconque des revendications 1 à 10, dans lequel les deux broches (9a, 9b) sont solidaires du dossier (3).

17. Siège (1) selon la revendication 16, dans lequel le dossier (3) comporte une partie supérieure (3a) à partir de laquelle s'étendent les broches (9a, 9b), et ladite partie supérieure (3a) est recouverte par l'interface (15) .

## Patentansprüche

1. Kopfstützen-Anordnung (6) für einen Fahrzeugsitz (1), umfassend:
- zwei Stifte (9a, 9b), welche sich jeweils im Wesentlichen entlang einer Einstellrichtung (Z) zwischen einem unteren Ende (26a, 26b) und einem oberen Ende (25a, 25b) erstrecken, wobei jeder der beiden Stifte einen Montageabschnitt (14a, 14b), welcher das untere Ende umfasst und dazu vorgesehen ist, an einer Rückenlehne (3) des Sitzes (1) befestigt zu sein, einen Einstellabschnitt (16a, 16b), welcher das obere Ende umfasst, und einen Zwischenabschnitt (20a, 20b) aufweist, welcher zwischen dem Montageabschnitt und dem Einstellabschnitt umfasst ist,
- sowie eine Stützstruktur (17), welche dazu eingerichtet ist, den Kopf eines Benutzers zu stützen,
**dadurch gekennzeichnet, dass** die Kopfstützen-Anordnung (6) ferner eine Schnittstelle (15) umfasst, welche aus einem umspritzten Kunststoffmaterial hergestellt ist und die Zwischenabschnitte (20a, 20b) der beiden Stifte (9a, 9b) untereinander verbindet.

2. Kopfstützen-Anordnung (6) nach Anspruch 1, ferner umfassend eine Einstellplatte (11), welche mit dem Einstellabschnitt (16a, 16b) von jedem der beiden Stifte (9a, 9b) gekoppelt ist, wobei die Stützstruktur (17) einstellbar in Translation an der Einstellplatte (11) entlang der Einstellrichtung (Z) montiert ist.

3. Kopfstützen-Anordnung (6) nach Anspruch 2, wobei die Einstellplatte (11) aus einem umspritzten Kunststoffmaterial an dem Einstellabschnitt (16a, 16b) von jedem der Stifte (9a, 9b) hergestellt ist.

4. Kopfstützen-Anordnung (6) nach Anspruch 3, wobei die Schnittstelle (15) einteilig an den Stiften (9a, 9b) mit der Einstellplatte (11) derart umspritzt ist, dass eine Tragestruktur (8) gebildet ist, wobei die Tragestruktur (8) aus einem einzelnen Stück gebildet ist.

5. Kopfstützen-Anordnung (6) nach Anspruch 1 oder Anspruch 2, wobei die Einstellplatte (11) wenigstens teilweise durch die Schnittstelle (15) umspritzt ist.

6. Kopfstützen-Anordnung (6) nach einem der vorhergehenden Ansprüche, wobei die beiden Stifte (9a, 9b) metallisch sind, und wobei die Zwischenabschnitte (20a, 20b) der Stifte (9a, 9b) wenigstens teilweise durch die umspritzte Schnittstelle (15) bedeckt sind.

7. Kopfstützen-Anordnung (6) nach einem der vorhergehenden Ansprüche, wobei die Zwischenabschnitte (20a, 20b) der Stifte (9a, 9b) integral durch die umspritzte Schnittstelle (15) bedeckt sind.

8. Kopfstützen-Anordnung (6) nach einem der vorhergehenden Ansprüche, wobei die Schnittstelle (15) massiv ist.

9. Kopfstützen-Anordnung (6) nach einem der vorhergehenden Ansprüche, wobei die Schnittstelle (15) einteilig an den Zwischenabschnitten (20a, 20b) der Stifte (9a, 9b) umspritzt ist.

10. Kopfstützen-Anordnung (6) nach einem der vorhergehenden Ansprüche, wobei der Zwischenabschnitt (20a, 20b) von jedem der Stifte (9a, 9b) eine Biegung (21) mit einer Basis (21a), welche sich entlang einer transversalen Richtung (Y) senkrecht zu der Einstellrichtung (Z) erstreckt, und zwei Bögen (21b) aufweist, welche die Basis mit anderen Stiftabschnitten verbindet, welche sich entlang der Einstellrichtung (Z) erstrecken.

11. Verfahren zum Herstellen einer Kopfstützen-Anordnung (6) nach einem der vorhergehenden Ansprüche, umfassend wenigstens einen Schritt, bestehend aus:
- Spritzgießen einer Schnittstelle (15) aus Kunststoffmaterial derart, dass die beiden Stifte (9a, 9b) untereinander verbunden werden.

12. Verfahren zum Herstellen nach Anspruch 11, wobei zwei metallische Stifte (9a, 9b) in einer Form angeordnet werden, und wobei das Spritzgießen von Kunststoffmaterial zum wenigstens teilweisen Umspritzen der Schnittstelle (15) an einem Zwischenabschnitt (20a, 20b) von jedem der Stifte (9a, 9b) hervorgerufen wird.

13. Verfahren zum Herstellen nach Anspruch 11 oder Anspruch 12, ferner umfassend wenigstens einen Schritt, bestehend aus:
- Spritzgießen einer Einstellplatte (11) aus Kunststoffmaterial, indem ein Einstellabschnitt (16a, 16b) von jedem der Stifte (9a, 9b) umspritzt wird.

14. Verfahren zum Herstellen nach Anspruch 11 oder Anspruch 12, wobei eine Einstellplatte (11) in einer Form angeordnet wird, und wobei das Spritzgießen von Kunststoffmaterial zum wenigstens teilweisen Umspritzen der Schnittstelle (15) an der Einstellplatte (11) hervorgerufen wird.

15. Verfahren zum Herstellen nach Anspruch 14, ferner umfassend die Schritte, bestehend aus:
- Koppeln der Einstellplatte (11) an einen Einstellabschnitt (16a, 16b) der beiden metallischen Stifte (9a, 9b),
- Platzieren der durch die Einstellplatte (11) und die beiden Stifte (9a, 9b) gebildeten Anordnung in der Form,
- Spritzgießen der Schnittstelle (15) aus Kunststoffmaterial, indem der Zwischenabschnitt (20a, 20b) der beiden Stifte und die Einstellplatte (11) umspritzt werden.

16. Sitz (1), umfassend eine Rückenlehne (3) und eine Kopfstützen-Anordnung (6) nach einem der Ansprüche 1 bis 10, wobei die beiden Stifte (9a, 9b) mit der Rückenlehne (3) gekoppelt sind.

17. Sitz (1) nach Anspruch 16, wobei die Rückenlehne (3) einen oberen Abschnitt (3a) umfasst, von welchem ausgehend sich die Stifte (9a, 9b) erstrecken, und wobei der obere Abschnitt (3a) durch die Schnittstelle (15) bedeckt ist.

## Claims

1. Head rest assembly (6) for a seat (1) of a vehicle comprising:
- two pins (9a, 9b) each one extending substantially along an adjustment direction (Z) between a lower end (26a, 26b) and an upper end (25a, 25b), with each one of the two pins having a mounting portion (14a, 14b) that comprises the lower end and intended to be fastened to a seat back (3) of a seat (1), an adjustment portion (16a, 16b) comprising the upper end, and an intermediate portion (20a, 20b) between the mounting portion and the adjustment portion,
- and a support structure (17) adapted to support the head of a user,
**characterised in that** the head rest assembly (6) further comprises an interface (15) made from overmoulded plastic and connecting together the intermediate portions (20a, 20b) of the two pins (9a, 9b).

2. Head rest assembly (6) according to claim 1, further comprising an adjustment plate (11) integral with the adjustment portion (16a, 16b) of each one of the two pins (9a, 9b), the support structure (17) being adjustably mounted in translation on the adjustment plate (11) along the adjustment direction (Z).

3. Head rest assembly (6) according to claim 2, wherein the adjustment plate (11) is made from overmoulded plastic material on the adjustment portion (16a, 16b) of each one of the two pins (9a, 9b).

4. Head rest assembly (6) according to claim 3, wherein the interface (15) is overmoulded in a single piece on the pins (9a, 9b) with the adjustment plate (11) in such a way as to form a support structure (8), the support structure (8) being formed from a single part.

5. Head rest assembly (6) according to claim 1 or claim 2, wherein the adjustment plate (11) is at least partially overmoulded by the interface (15).

6. Head rest assembly (6) according to any preceding claim, wherein the two pins (9a, 9b) are metallic, and wherein the intermediate portions (20a, 20b) of the pins (9a, 9b) are covered at least partially by the overmoulded interface (15).

7. Head rest assembly (6) according to any preceding claim, wherein the intermediate portions (20a, 20b) of the pins (9a, 9b) are entirely covered by the overmoulded interface (15).

8. Head rest assembly (6) according to any of the preceding claims, wherein the interface (15) is massive.

9. Head rest assembly (6) according to any preceding claim, wherein the interface (15) is overmoulded in a single piece on the intermediate portions (20a, 20b) of the pins (9a, 9b).

10. Head rest assembly (6) according to any preceding claim, wherein the intermediate portion (20a, 20b) of each one of the pins (9a, 9b) has a deflection (21) that has a base (21a) extending along a transversal direction (Y) perpendicular to the adjustment direction (Z) and two bends (21b) that connect said base to the other portions of pins extending along the adjustment direction (Z).

11. Method for manufacturing a head rest assembly (6) according to any preceding claim, comprising at least one step consisting in:
- moulding via plastic injection an interface (15) in such a way as to connect two pins (9a, 9b) together.

12. Method for manufacturing according to claim 11, wherein two metal are arranged pins (9a, 9b) in a mould, and wherein the plastic injection moulding is carried out in order to overmould the interface (15) at least partially on an intermediate portion (20a, 20b) of each one of the pins (9a, 9b).

13. Method for manufacturing according to claim 11 or claim 12, comprising at least one step consisting in:
- moulding by plastic injection, an adjustment plate (11) by overmoulding an adjustment portion (16a, 16b) of each one of the pins (9a, 9b).

14. Method for manufacturing according to claim 11 or claim 12, wherein an adjustment plate (11) is arranged in a mould, and wherein the plastic material injection moulding is carried out in order to overmould the interface (15) at least partially on the adjustment plate (11).

15. Method for manufacturing according to claim 14, comprising at least the steps consisting in:
- rendering integral the adjustment plate (11) on an adjustment portion (16a, 16b) of the two metal pins (9a, 9b),
- placing the assembly formed by the adjustment plate (11) and the two pins (9a, 9b) in the mould,
- moulding by plastic material injection the interface (15) by overmoulding the intermediate portion (20a, 20b) of the two pins and the adjustment plate (11).

16. Seat (1) comprising a seat back (3) and a head rest assembly (6) according to any of claims 1 to 10, wherein the two pins (9a, 9b) are integral with the seat back (3).

17. Seat (1) according to claim 16, wherein the seat back (3) comprises an upper portion (3a) starting from which the pins (9a, 9b) extend, and said upper portion (3a) is covered by the interface (15).
